Europäisches Patentamt

(19) **European Patent Office**

Office européen des brevets

(11) Numéro de publication: **0 037 357**
**A1**

(12) # DEMANDE DE BREVET EUROPEEN

(21) Numéro de dépôt: **81630018.0**

(22) Date de dépôt: **18.02.81**

(51) Int. Cl.³: **G 01 F 23/24**
**C 21 C 5/30**

(30) Priorité: **01.04.80 LU 82312**

(43) Date de publication de la demande:
**07.10.81 Bulletin 81/40**

(84) Etats contractants désignés:
**AT BE DE GB IT SE**

(71) Demandeur: **ARBED S.A.**
**Avenue de la Liberté**
**L-2930 Luxembourg(LU)**

(72) Inventeur: **Schummer, Arthur**
**68 rue de Luxembourg**
**L-4221 Esch/Alzette(LU)**

(72) Inventeur: **Liesch, Jean**
**117 rue de Luxembourg**
**L-4221 Esch/Alzette(LU)**

(74) Mandataire: **Neyen, René**
**Administration Centrale de l'Arbed Case postale 1802**
**L-2930 Luxembourg(LU)**

(54) **Système de mesure des niveaux du bain de métal et de la scorie dans un creuset métallurgique au cours de l'affinage de la fonte brute.**

(57) Pour suivre la position des niveaux du bain de métal et de la scorie dans un creuset métallurgique, au cours de l'affinage de la fonte brute, un système de mesure consiste en une pluralité de capteurs de température, constitués de barres (1) en un matériau bon conducteur de la chaleur. Chaque barre est munie d'une enveloppe isolante (10) du point de vue thermique, une extrémité se trouvant exposée au contact direct avec le contenu du creuset, tandis que l'autre extrémité est logée dans une cellule thermostatisée froide (4) et reliée à un système de mesure de la température (2).

Pour mesurer l'usure du réfractaire et du canal thermique, ce dernier est équipé d'un émetteur-récepteur ultrasonore (7), relié à une unité de traitement électronique du signal mesuré, qui quantifie en continu le flux thermique traversant la barre.

FIG.1

Système de mesure des niveaux du bain de métal et de la scorie dans un creuset métallurgique au cours de l'affinage de la fonte brute

La présente invention concerne un système pour la détermination des niveaux du bain de métal et de la scorie dans un creuset métallurgique au cours de l'affinage de la fonte brute.

La connaissance du niveau de la scorie dans un convertisseur d'aciérie est importante, tant du point de vue métallurgique, comme paramètre du degré d'avancement de l'affinage, que du point de vue de la sécurité, en vue de prévenir un débordement.

Ainsi le déposant a développé un système de mesure du niveau de la scorie qui permet en même temps une évaluation de la consistance de celle-ci, ce qui constitue une information importante, surtout pour l'affinage de fontes phosphoreuses où une scorie d'une consistance mousseuse était jugée désirable.

Ce système de mesure que le déposant a décrit dans le brevet luxembourgeois no 71.261, comporte un conduit acoustique thermostatisé qui est disposé au-dessus du convertisseur et qui capte le bruit émis par la lance de soufflage d'oxygène. Après filtrage des fréquences dont l'origine est étrangère aux paramètres qui intéressent pour la mesure proprement dite, on retient un signal dont l'interprétation permet de conclure au degré du bruit par la scorie et par là au degré du caractère mousseux présent, ainsi qu'à son niveau dans le creuset.

Etant donné d'une part l'emplacement du capteur acoustique qui est situé essentiellement en-dehors du creuset pour réduire le plus possible les risques d'endommagement par projections et éclaboussures et, d'autre part, le fait que l'installation de mesure capte les bruits à fréquences caractéristiques issus de la lance de soufflage, il est clair que ladite installation n'est utilisable que sous condition que dans l'aciérie un seul creuset à la fois se trouve en état de soufflage. En effet, dans le cas de 2 ou plusieurs convertisseurs en phase de soufflage, l'installation ne manquerait d'être perturbée par la captation des bruits caractéristiques émis par le convertisseur voisin.

Le même système de mesure où l'emplacement du capteur est situé en-dehors du creuset, est problématique dans le cas des installations d'affinage où le creuset peut être relié de manière plus ou moins étanche à la cheminée p.ex. à l'aide d'une jupe mobile munie de vérins hydrauliques. Il s'agit dans ce cas d'installations d'affinage où au cours du soufflage on empêche dans la mesure du possible l'accès d'air dans la cheminée, soit pour soustraire les gaz formés au cours de l'élaboration en vue d'une utilisation comme gaz de combustion, soit pour prévenir une postcombustion du monoxyde de carbone au voisinage immédiat de la tuyauterie du système de refroidissement installé dans la cheminée.

Ainsi le déposant a proposé un système de mesure qui est décrit dans la demande de brevet luxembourgeois no 81.512 et qui est caractérisé en ce que l'on prévoit à différents niveaux au-dessus du niveau de remplissage du creuset au moins deux prises de la pression hydrostatique, balayées par des jets de gaz inerte à débit réglable, que l'on ajuste les pressions desdites prises à des valeurs égales entre elles, que l'on capte ensuite les pressions existant auxdites prises et que l'on détermine le niveau de la scorie dans le creuset en interprétant les déviations des pressions mesurées par rapport à leurs valeurs initiales.

Le balayage des prises au moyen du gaz inerte devait assurer que l'embouchure à la face intérieure du réfractaire dans lequel sont logées les prises de pression soit toujours dégagée et le moins possible affectée par d'éventuelles éclaboussures.

Or, ce système de mesure, valable en soi, est trop tributaire des conditions sévères régnant dans le creuset au cours de l'élaboration, si bien que les précautions prévues pour protéger l'embouchure des prises de pressions ne s'avérèrent pas toujours comme suffisantes.

Le but de l'invention consiste donc à proposer un système de mesure simple, exempt des difficultés décrites et capable d'établir l'épaisseur de la couche de scorie, tant dans le cas de plusieurs creusets voisins, que dans le cas d'installations où l'affinage est opéré en vase clos.

Ce but est atteint par le système de mesure suivant l'invention qui est caractérisé en ce qu'il consiste en une pluralité de capteurs de température qui traversent la paroi du creuset le long d'une ligne située essentiellement dans le plan de l'axe, et en ce que chaque capteur est constitué d'une barre en un matériau bon conducteur de la chaleur, munie d'une enveloppe isolante du point de vue thermique, une extrémité de la barre se trouvant exposée au contact direct avec le contenu du creuset, tandi que l'autre extrémité est logée dans une cellule thermostatisée froide et reliée à un système de mesure de la température.

L'idée qui est à la base de la présente invention consiste en ce que l'on s'éloigne des systèmes de mesure mettant en oeuvre des capteurs optiques ou soniques, capteurs qui sont tous tributaires des inconvénients d'ordre thermique ou mécanique, tels que brûlures, éclaboussures, projections, qui sont courants dans le domaine de l'affinage par soufflage d'oxygène. En effet, toutes les installations de mesure connues et qui permettent d'arriver tant bien que mal à une évaluation de l'emplacement du niveau de la scorie dans le creuset, doivent comprendre des éléments de protection pour les capteurs sensibles à la température et aux sollicitations mécaniques, si bien que ces systèmes sont d'une part onéreux et que, d'autre part, leur bon fonctionnement dépend de l'état des éléments de protection.

Par contre, le système de mesure suivant l'invention prévoit de créer dans la carcasse du creuset plusieurs canaux par où passent à tout moment des flux thermiques d'intensité différente suivant la présence de scorie liquide ou mousseuse ou de métal en fusion. Un pareil canal thermique, réalisé par l'intermédiaire d'une barre en un matériau bon conducteur de la chaleur, se prête de manière quasi idéale à la détection d'une source de chaleur intense tout en étant pratiquement insensible à l'effet destructeur de la chaleur, dont il faut mettre à l'abri les capteurs conventionnels et ceci grâce à la bonne conductibilité thermique du matériau, combinée à l'isolation thermique dont on munit ladite barre, ainsi qu'à la thermostatisation de son extrémité située en-dehors du creuset.

En effet, la chaleur intense qui frappe l'extrémité chaude de la barre au contact avec la scorie ou avec le métal, est véhiculée avec rapidité vers l'extrémité refroidie; des éclaboussures ou des projections ne sauraient ni endommager, ni obstruer la section de contact de la barre. Tandis qu'une éclaboussure de scorie est capable d'arrêter le fonctionnement d'un capteur optique ou sonique du moins au cours de la période de soufflage où une intervention extérieure est exclue, il n'en est pas de même dans le cas présent où une éclaboussure ne constitue aucun obstacle, étant donné qu!au moment décisif, c.à.d. lorsque s'approche le niveau de la scorie liquide, l'obstacle fond et libère la section de contact du canal thermique qui n'a pas cessé de fonctionner.

De même l'usure progressive du réfractaire au cours de la campagne de soufflage, qui représente un problème pour tous les systèmes conventionnels, ne se répercute pas de manière notable sur les résultats de mesure dans le cas présent. En effet, l'usure du réfractaire conduit tout au plus à une usure correspondante de la barre, dont la section de contact reste en permanence à la hauteur de la surface du réfractaire. Il en résulte évidemment un raccourcissement du canal thermique.

Suivant une forme d'exécution particulièrement avantageuse, il est prévu de mesurer en continu ce raccourcissement à l'aide d'un capteur émetteur-récepteur ultra-sonore qui est monté du côté thermostatisé du canal thermique. Une unité de traitement du signal, mis à disposition par ce capteur, permet de quantifier exactement le flux thermique, en fonction de l'usure du réfractaire et par là, en fonction du raccourcissement du canal thermique.

Tandis que certains systèmes connus de mesure du niveau et/ou de la consistance de la scorie ne permettent que l'obtention d'un signal "tout ou rien", le signal qui est mis à la disposition grâce au système suivant l'invention est essentiellement évolutif, étant donné le caractère même du canal thermique.

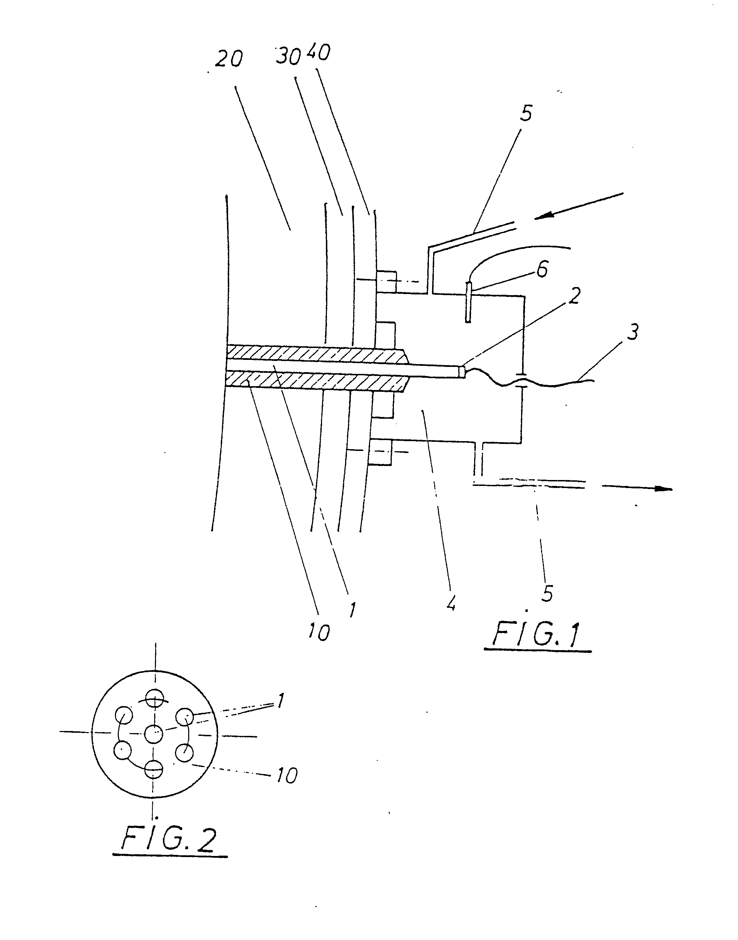

D'autres caractéristiques et avantages ressortiront de la description des dessins où la fig. 1 représente une coupe longitudinale schématisée à travers un capteur formant une unité dans le système de mesure suivant l'invention, tandis que la fig. 2 montre une coupe transversale d'un capteur comprenant plusieurs barres.

On distingue en fig. 1 une barre (1) servant au transport de chaleur. Cette barre qui doit être en un matériau bon conducteur de la chaleur est en métal, de préférence en cuivre.

La barre est munie d'une enveloppe isolante (10) et l'ensemble (1, 10) traverse le réfractaire d'usure (20), le garnissage (30) et la carcasse (40) d'un creuset.

La barre (1) aboutit dans une cellule thermostatisée (4) fixée à la carcasse (40) du creuset et refroidie par un gaz. On distingue les conduits (5) et le thermostat (6) qui règle le débit du gaz de refroidissement.

La barre (1) est connectée à un conducteur métallique (3), qui est utilement en constantan, via le thermocouple (2).

L'émetteur-récepteur ultrasonore (7) est monté axialement au canal thermique, du côté thermostatisé du système.

En fig. 2 on a représenté une construction comprenant plusieurs barres (1) munies d'une enveloppe commune (10) d'isolation thermique. Il est bien entendu que cette forme d'exécution offre un surplus de sécurité, surtout pour la barre centrale, par un accroissement du flux thermique réalisé par la multiplication des canaux en jeu.

Revendications

1. Système de mesure des niveaux du bain de métal et de la scorie dans un creuset métallurgique au cours de l'affinage de la fonte brute, caractérisé en ce qu'il consiste en une pluralité de capteurs de température qui traversent la paroi du creuset le long d'une ligne située essentiellement dans le plan de l'axe, et en ce que chaque capteur est constitué d'une barre, en un matériau bon conducteur de la chaleur, munie d'une enveloppe isolante du point de vue thermique, une extrémité de la barre se trouvant exposée au contact direct avec le contenu du creuset, tandis que l'autre extrémité est logée dans une cellule thermostatisée froide et reliée à un système de mesure de la température.

2. Système suivant la revendication 1, caractérisé en ce que le matériau bon conducteur de la chaleur est un métal, de préférence du cuivre, et le système de mesure de la température est un thermocouple électrique.

3. Système suivant les revendications 1-2, caractérisé en ce que la cellule thermostatisée est refroidie à l'aide d'un gaz, de préférence de l'air.

4. Système suivant les revendications 1-3, caractérisé en ce que chaque capteur est constitué d'un faisceau de barres, isolées entre elles et comportant en plus une enveloppe isolante du point de vue thermique.

5. Système suivant les revendications 1-4, caractérisé en ce que, en vue de déterminer l'usure du réfractaire et du canal thermique, ce dernier est équipé d'un émetteur-récepteur ultrasonore relié à une unité de traitement électronique du signal mesuré qui quantifie en continu le flux thermique.

0037357

20  30 40

5

6

2

3

1

10

4

5

*FIG.1*

1

10

*FIG.2*

Office européen
des brevets

**RAPPORT DE RECHERCHE EUROPEENNE**

EP 81 63 0018

| | DOCUMENTS CONSIDERES COMME PERTINENTS | | | CLASSEMENT DE LA DEMANDE (Int. Cl.³) |
|---|---|---|---|---|
| Catégorie | Citation du document avec indication, en cas de besoin, des parties pertinentes | Revendication concernée | | |
| | BE - A - 666 483 (ACIERIES ET MI-NIERES DE LA SAMBRE) <br> * En entier * | 1,2 | | G 01 F 23/24 <br> C 21 C 5/30 |
| | -- | | | |
| | FR - A - 2 299 630 (W.P. WAIWOOD) <br> * Page 1, lignes 1-5; page 2, ligne 36 - page 3, ligne 29; page 4, lignes 20-29; figures 1,3 * | 1,2 | | |
| | -- | | | **DOMAINES TECHNIQUES RECHERCHES (Int. Cl.³)** |
| | FR - E - 2 171 045 (USS ENGINEERS AND CONSULTANTS INC) <br> * Page 3, ligne 6 - page 4, ligne 23; figures 1,2 * | 1,2 | | G 01 F 23/24 <br> 23/28 <br> G 01 K 11/22 <br> 11/24 <br> 11/26 <br> C 21 C 5/30 |
| | -- | | | |
| | US - A - 3 019 650 (B.A. WORSWICK) <br> * Colonne 1, lignes 21-29; colonne 1, ligne 56 - colonne 3, ligne 27; figures 1-5 * | 5 | | |
| | -- | | | |
| | US - A - 4 020 692 (A.E. ARAVE) <br> * Colonne 1, lignes 40-50; colonne 3, lignes 28-49; figure 1 * | 5 | | **CATEGORIE DES DOCUMENTS CITES** <br> X: particulièrement pertinent <br> A: arrière-plan technologique <br> O: divulgation non-écrite <br> P: document intercalaire <br> T: théorie ou principe à la base de l'invention |
| | -- | | | |
| EP | WO - A - 80/02745 (T. BOWEN) <br> * Abrégé; page 13, lignes 4-27; figure 1 * | 5 | | E: demande faisant interférence <br> D: document cité dans la demande <br> L: document cité pour d'autres raisons |
| | -- | | | |
| | ./. | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 08-07-1981 | NENTWICH |

OEB Form 1503.1  06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| A | <u>DE - C - 700 412</u> (A. SCHOELLER) <br> * Revendication 1; page 2, lignes 90-98; figure 1 * | 1,3 | |
| | | | **DOMAINES TECHNIQUES RECHERCHES (Int. Cl. ³)** |

OEB Form 1503.2   06.78